# EUROPÄISCHE PATENTSCHRIFT

(11) **EP 0 556 472 B1**
(45) Veröffentlichungstag und Bekanntmachung des Hinweises auf die Patenterteilung: **19.03.1997**
(21) Anmeldenummer: 92120940.9
(22) Anmeldetag: 09.12.1992
(51) Int. Cl.: B62D 25/08

(54) **Kraftwagen, insbesondere Bestattungswagen**
Motor vehicle, especially funeral car
Véhicule automobile, notamment corbillard

(30) Priorität: 10.02.1992 DE 9201615 U
(43) Veröffentlichungstag der Anmeldung: 25.08.1993
(73) Patentinhaber: RAPPOLD GmbH & CO. KG KAROSSERIE-UND FAHRZEUGBAU, D-42489 Wülfrath (DE)
(72) Erfinder: Rappold, Ingo, Dipl.-Ing., W-4020 Mettmann (DE); Puck, Horst, W-5603 Wülfrath (DE)
(74) Vertreter: Eichler, Peter, Dipl.-Ing.

(56) Entgegenhaltungen:
- WO-A-86/06337
- DE-A- 3 025 145
- DE-A- 3 837 252
- DE-U- 8 902 413

## Beschreibung

Die Erfindung bezieht sich auf einen Kraftwagen, insbesondere Bestattungswagen, mit einem Laderaum, der einen auf einem zur Karosserie gehörenden ersten Querträger aufliegenden Boden und eine seine rückwärtige Laderaumöffnung durch Herunterklappen zu verschließen erlaubende Heckklappe aufweist und der weiterhin heckseitig mit einer Anbauverlängerung versehen ist, die einen auf einem mit dem ersten Querträger verbundenen zweiten Querträger aufliegenden Verlängerungsboden aufweist und die Heckklappe enthält.

Ein Kraftwagen obiger Art ist durch das DE-U-89 02 413 bekannt. Er besitzt gegenüber herkömmlichen Kraftwagen mit heckseitig zugänglichem Laderaum eine für viele Zwecke nützliche verlängerte Ladelänge, die beispielsweise bei Bestattungswagen bis zu 2,15m und mehr betragen kann, wohingegen die gebräuchlichen Ladelängen auch bei größeren PKW-Kombi-Fahrzeugen nur bis zu 1,90m liegen. Um diese Laderaum-Verlängerung an den Fahrzeugen durch deren heckseitige Umrüstung zu erzielen, wird bei dem vorerwähnten bekannten Kraftwagen außer dem auf dem zusätzlichen Querträger aufliegenden Verlängerungsboden eine abgeänderte Heckklappe verwendet, die nämlich klappgelenkseitig verlängert und innen mit bis an die originale Abdichtungsleiste der Laderaumöffnung vorspringenden Abdichtungsfalzstegen versehen ist. Dabei bleibt die Karosserie praktisch ungeändert. Die vorerwähnten Anbauteile, können einen vorgefertigten Bausatz bilden, wobei dessen Teile auch von Nichtfachleuten angebracht und schließlich aber auch vergleichsweise einfach wieder entfernt werden können, so daß der Kraftwagen bei Bedarf auch wieder rückgerüstet werden kann.

Aus der DE-A-38 37 252 ist ein Kraftwagen mit einem Laderaum bekannt, der eine rückwärtige Laderaumöffnung hat, die durch Herunterklappen einer Heckklappe verschlossen werden kann. Der Kraftwagen ist heckseitig mit einer Anbauverlängerung versehen, das aus einem Rundum-Karosserieteil besteht, welches also ein Dachteil, zwei Seitenteile und ein die beiden letzteren miteinander verbindendes Bodenteil aufweist. Zum Einbau der Anbauverlängerung wird die Karosserie des Kraftwagens in einigem Abstand vor der Heckklappe vertikal durchtrennt und an dieser Trennstelle die Anbauverlängerung eingebaut. Ein derartiger Einbau einer Anbauverlängerung erfordert an deren beiden Seiten handwerkliche Maßnahmen, beispielsweise Schweiß- und Verkleidungsarbeiten. Die Umrüstung des bekannten Kraftwagens ist daher vergleichsweise aufwendig.

Demgegenüber liegt der Erfindung die Aufgabe zugrunde, einen Kraftwagen, insbesondere Bestattungswagen, zu schaffen, der auch mit einer heckseitigen Anbauverlängerung versehen ist, die jedoch auf andere gleichwohl einfache Weise, insbesondere unter Beibehalt der originalen Heckklappe zu erreichen ist. Diese Aufgabe wird ausgehend von einem Kraftwagen der eingangs erwähnten Gattung erfindungsgemäß dadurch gelöst, daß zur Anbauverlängerung eine die originale Karosserie verlängernde beidseitig und oben an ihr angebrachte Portalbrücke vorgesehen ist, die durch den auf dem zweiten Querträger aufliegenden Verlängerungsboden geschlossen ist, die eine dem Original entsprechende Laderaumöffnung besitzt und die die letztere verschließende originale Heckklappe trägt. Auf diese Weise kann ein Kraftwagen mit herkömmlich kurzem, rückwärtig zu beschickendem Laderaum ebenso einfach zu einem solchen mit entsprechend verlängertem Laderaum umgerüstet werden, und das unter Weiterverwendung seiner herkömmlichen Heckklappe. Die zu dieser Umrüstung notwendige Portalbrücke kann in Verlängerung der Karosserie leicht angebracht, insbesondere angeschraubt werden.

Die Portalbrücke besteht aus zwei durch den oberen Brückensteg miteinander verbundenen Seitenwänden und ist unten durch den auf dem zweiten Querträger aufliegenden Verlängerungsboden geschlossen. Sie weist damit eine der originalen Laderaumöffnung entsprechende Öffnung auf, wie auch die entsprechenden Scharniere und Dichtungsleisten für die diese Öffnung verschließende originale Heckklappe. Die für letztere notwendigen Klappscharniere können an den rückwärtigen Enden von unterhalb der Karosseriedecke und des oberen Brückensteges des Anbauportals vorgesehenen Verstärkungsschienen angebracht sein.

Die Portalbrücke kann in einer weiteren Version aber auch mit dem zweiten Querträger eine montierbare Baueinheit bilden, die also als Ganzes an der originalen Kraftwagen-Karosserie heckseitig angebracht werden kann.

Die Portalbrücke ist vorteilhaft auch mit den notwendigen in ihm eingebauten Rückleuchten versehen, wobei sie weiterhin entsprechende Seitenabdeckungen für die an der Originalkarosserie vorhandenen Rückleuchten aufweisen kann.

Die zwischen der Original-Karosserie und der Portalbrücke vorhandene Naht wird zweckmäßig durch eine Dichtung verschlossen. Etwa dennoch hier hindurchdringendes Wasser kann über die original vorhandene Regenwasserabflußrinne vom Fahrzeug im Heckklappenrahmen abgeführt werden.

Wenn die Portalbrücke, was in jedem Falle von Vorteil ist, an der Karosserie lösbar, insbesondere schraubbefestigt ist, kann sie je nach Bedarf auch wieder abgebaut und seine Heckklappe an der Original-Karosserie ungeändert angebracht werden.

In der Zeichnung ist ein Ausführungsbeispiel eines erfindungsgemäß beschaffenen Kraftwagens dargestellt. Dabei zeigt
- Fig.1: das Heck des verlängerten Kraftwagens in der Seitenansicht und
- Fig.2: die zugehörige Draufsicht auf das Fahrzeugheck.

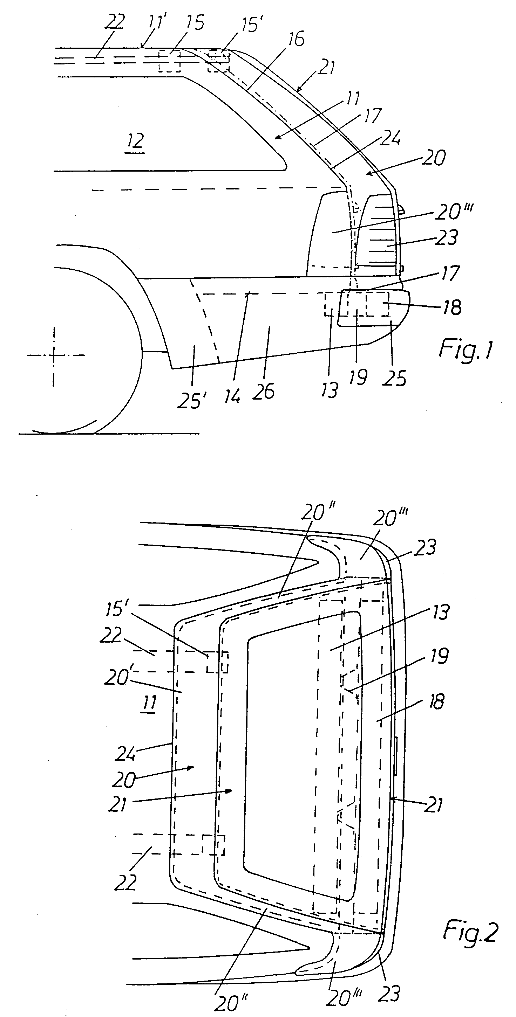

Der dargestellte Kraftwagen ist ein umgerüstetes PKW-Kombi-Fahrzeug, dessen Umrüstung sich auf den abgebildeten Heckbereich beschränkt. Zum ursprünglichen Fahrzeug gehören der von der Karosserie 11 umgebene Laderaum 12, der auf dem ersten Querträger 13 aufliegende Laderaumboden 14, die in der Karosseriedecke 11' rückwärtig angeordneten Scharniergelenke 15, die in der Zeichnung abgedeckten, beidseitig angeordneten Rückleuchten und die gleichfalls nicht sichtbare, in Höhe der Fläche 16 verlaufende, mit Dichtungsleisten versehene ursprüngliche Laderaumöffnung mit der darin ursprünglich angeordneten, hochklappbaren Heckklappe, die durch die strichpunktierte Linie 17 in Fig.1 angedeutet ist.

Zur rückwärtigen Verlängerung des Laderaums 12 um ca. 20 bis 30cm und mehr ist einerseits wie bei dem eingangs erwähnten vorbekannten Kraftwagen ein Verlängerungsboden 17 vorgesehen, der auf einem zweiten Querträger 18 aufliegt, der seinerseits mit dem ersten Querträger 13 über die Abstandshalter 19 fest verbunden ist. Zum anderen dient aber hier zur erfindungsgemäßen Anbauverlängerung des Kraftwagens ein die originale Karosserie 11 verlängerndes, beidseitig und oben an ihr angebrachte Portalbrücke 20, die eine dem Original entsprechende Laderaumöffnung besitzt und die letztere verschließende originale Heckklappe 21 trägt. Hierzu sind die den ursprünglichen Scharniergelenken 15 entsprechende Scharniergelenke 15' entsprechend nach rückwärts versetzt angeordnet, und zwar an den Enden von Verstärkungsschienen 22, die unterhalb der Karosseriedecke 11' und des oberen Brückensteges 20' des Anbauportalrahmens 20 angebracht sind.

Die Portalbrücke 20 wird von den zwei Seitenwänden 20'' und dem sie oben miteinander verbindenden Brückensteg 20' gebildet. Unten kann diese Portalbrücke 20 durch den Verlängerungsboden 17 der Anbauverlängerung geschlossen werden. Die Portalbrücke 20 ist an der originalen Karosserie 11 lösbar befestigt, insbesondere mittels entsprechender Verbindungsschrauben. Dadurch kann das Anbauportal 20 im Bedarfsfall auch von der Karosserie 11 wieder abgenommen und die in letzterer vorhandene Laderaumöffnung durch die originale Heckklappe 21 wieder geschlossen werden, wodurch eine entsprechende Rückrüstung des Kraftwagens möglich ist.

Um die an der Original-Karosserie 11 rückseitig vorhandenen Rückleuchten abzudecken, sind an den Seitenwänden 20'' der Portalbrücke 20 noch zusätzliche Seitenabdeckungen 20''' vorgesehen. Die notwendigen Rückleuchten 23 können ohne weiteres in die Anbauportal-Seitenwände 20'' eingebaut werden. Die zwischen der Original-Karosserie 11 und der Anbauportalbrücke 20 vorhandene Naht 24 kann durch eine entsprechende Dichtung hinreichend abgedichtet werden.

Die Portalbrücke 20 kann auch mit dem zweiten Querträger 18 zu einer gemeinsam montierbaren Baueinheit fest verbunden sein, die als Ganzes dann am rückwärtigen Ende der Fahrzeug-Karosserie 11 an- und gegebenenfalls auch wieder abgenommen werden kann, sofern eine Rückrüstung des Fahrzeugs gewünscht wird.

Wesentlich für die vorliegende Erfindung ist vor allem, daß durch die rückseitig an der originalen Fahrzeug-Karosserie 11 anzubringende Portalbrücke 20 die Heckklappe 21 in ihrer ursprünglichen Form verwendet werden kann, ohne daß also darin irgendwelche Änderungen vorgenommen zu werden brauchten. Diese reversible Anbauverlängerung der Fahrzeug-Karosserie ist für Kraftwagen mannigfachster Art, wie insbesondere Lieferwagen, Kombi-Fahrzeuge, Karavans usw. gleich gut geeignet. Das dazu notwenige Umrüsten der Fahrzeuge erfordert vergleichsweise einfache Arbeiten, insbesondere wenn dafür vorgefertigte Bausätze verwendet werden, die lediglich in geeigneter Weise am Original-Fahrzeug leicht anzubringen sind. Dabei versteht es sich, daß in allen Fällen dieser Kraftwagen-Anbauverlängerung auch die Stoßfänger 25 mit entsprechenden, um die Abschnitte 25' verlängerten Seitenwandteilen 26 versehen werden, um dem Kraftwagen ein gefälliges Aussehen zu bewahren.

## Patentansprüche

1. Kraftwagen, insbesondere Bestattungswagen, mit einem Laderaum (12), der einen auf einem zur Karosserie (11) gehörenden ersten Querträger (13) aufliegenden Boden (14) und eine seine rückwärtige Laderaumöffnung durch Herunterklappen zu verschließen erlaubende Heckklappe (21) aufweist und der weiterhin heckseitig mit einer Anbauverlängerung versehen ist, die einen auf einem mit dem ersten Querträger (13) verbundenen zweiten Querträger (18) aufliegenden Verlängerungsboden (17) aufweist und die Heckklappe (21) enthält, **dadurch gekennzeichnet**, daß zur Anbauverlängerung eine die originale Karosserie (11) verlängernde beidseitig und oben an ihr angebrachte Portalbrücke (20) vorgesehen ist, die durch den auf dem zweiten Querträger (18) aufliegenden Verlängerungsboden (17) geschlossen ist, die eine dem Original entsprechende Laderaumöffnung besitzt und die die letztere verschließende originale Heckklappe (21) trägt.

2. Kraftwagen nach Anspruch 1, **dadurch gekennzeichnet**, daß die Portalbrücke (20) mit dem zweiten Querträger (18) eine montierbare Baueinheit bildet.

3. Kraftwagen nach Anspruch 1 oder 2, **dadurch gekennzeichnet**, daß unterhalb der Karosseriedecke (11') und des oberen Brückensteges (20') der Protalbrücke (20) Verstärkungsschienen (22) mit an ihren rückwärtigen Enden angebrachten Klappscharnieren (15') für die Heckklappe (21) vorgesehen sind.

4. Kraftwagen nach einem der Ansprüche 1 bis 3, **dadurch gekennzeichnet**, daß die Portalbrücke (20) mit eingebauten Rückleuchten (23) sowie mit Seitenabdeckungen (20''') für die an der Original-Karosserie (11) vorhandenen Rückleuchten versehen ist.

5. Kraftwagen nach einem der Ansprüche 1 bis 4, **dadurch gekennzeichnet**, daß die zwischen der Original-Karosserie (11) und der Portalbrücke (20) vorhandene Naht (24) durch eine Dichtung verschlossen ist.

6. Kraftwagen nach einem der Ansprüche 1 bis 5, **dadurch gekennzeichnet**, daß die Portalbrücke (20) an der Karosserie (11) lösbar befestigt, insbesondere schraubbefestigt ist und die Heckklappe (21) nach Abnahme der Portalbrücke (20) an der Original-Karossserie (11) ungeändert anzubringen ist.

## Claims

1. Motor vehicle, particularly funeral vehicle, having a load space (12) which comprises a floor (14) resting on a first transverse bearer (13) relating to the bodywork (11) and a tailgate (21) arranged to close off the rearward facing opening to the load space when hinged down and which is also provided with an add-on extension at the rear end, said extension comprising a floor extension (17) resting on a second transverse bearer (18) connected to the first transverse bearer (13) and including the tailgate (21), **characterised in that** a bridging arch (20) is provided, extending the original bodywork (11) and fitted to it on both sides and at the top, said arch being closed off by the floor extension (17) resting on the second transverse bearer (10), having a load space opening corresponding to the original, and carrying the original tailgate (21) which closes off said latter load space opening.

2. Motor vehicle according to claim 1, **characterised in that** the bridging arch (20) with the second transverse bearer (18) constitutes a mountable structural unit.

3. Motor vehicle according to claim 1 or 2, **characterised in that** below the bodywork roof (11') and below the upper bridging piece (20') of the bridging arch (20) are provided reinforcing rails (22) with flap hinges (15') for the tailgate (21) fitted at their rearward ends.

4. Motor vehicle according to one of claims 1 to 3, **characterised in that** the bridging arch (20) is provided with built-in rear lights (23) as well as with masking side panels (20''') for the rear lights provided on the original bodywork (11).

5. Motor vehicle according to one of claims 1 to 4, **characterised in that** the seam (24) provided between the original bodywork (11) and the bridging arch (20) is closed by a seal.

6. Motor vehicle according to one of claims 1 to 5, **characterised in that** the bridging arch (20) is releasably secured to the bodywork (11), particularly by being screwed to it, and the tailgate (21) can be re-fitted unchanged to the original bodywork (11) after removal of the bridging arch (20).

## Revendications

1. Automobile, en particulier corbillard, pourvue d'un espace de chargement (12) qui comporte un plancher (14) posé sur une première traverse (13) faisant partie de la carrosserie (11) et un hayon (21) permettant, en se rabattant, de fermer l'ouverture arrière de l'espace de chargement, et qui est également pourvu, à l'arrière, d'un prolongement rapporté qui comprend un plancher de prolongement (17) posé sur une second traverse (18) reliée à la première (13) et qui contient le hayon (21), caractérisée en ce qu'il est prévu, comme prolongement rapporté, un élément en forme de portique (20) qui prolonge la carrosserie d'origine (11) et qui est monté des deux côtés et sur le dessus de celle-ci, qui est fermé par le plancher de prolongement (17) posé sur la seconde traverse (18), qui comporte une ouverture d'espace de chargement correspondant à l'original et qui porte enfin le hayon d'origine (21) fermant ladite ouverture.

2. Automobile selon la revendication 1, **caractérisée** en ce que l'élément en forme de portique (20) forme avec la seconde traverse (18) une unité de construction apte à être montée.

3. Automobile selon la revendication 1 ou 2, **caractérisée** en ce qu'il est prévu, au-dessous du toit (11') de la carrosserie et de la partie centrale supérieure (20') de l'élément en forme de portique (20), des rails de renforcement (22) pourvus à leurs extrémités arrière de charnières (15') pour le hayon (21).

4. Automobile selon l'une des revendications 1 à 3, **caractérisée** en ce que l'élément en forme de portique (20) est pourvu de feux arrière intégrés (23) et de recouvrements latéraux (20''') pour les feux arrière prévus sur la carrosserie d'origine (11).

5. Automobile selon l'une des revendications 1 à 4, **caractérisée** en ce que le joint (24) prévu entre la carrosserie d'origine (11) et l'élément en forme de portique (20) est fermé par un joint d'étanchéité.

6. Automobile selon l'une des revendications 1 à 5, **caractérisée** en ce que l'élément en forme de portique (20) est fixé de façon amovible à la carrosserie (11), notamment par vissage, et le hayon (21) est à monter sans modification sur la carrosserie d'origine (11) une fois que l'élément en forme de portique (20) a été enlevé.
